# EUROPÄISCHE PATENTSCHRIFT

(11) **EP 0 729 825 B1**
(45) Veröffentlichungstag und Bekanntmachung des Hinweises auf die Patenterteilung: **29.05.2002**
(21) Anmeldenummer: 96102554.1
(22) Anmeldetag: 21.02.1996
(51) Int. Cl.: B29D 30/20, B29D 30/58

(54) **Verfahren zur Herstellung eines Reifens**
Process for producing a tyre
Procédé de fabrication d'un pneumatique

(30) Priorität: 03.03.1995 DE 19507486
(43) Veröffentlichungstag der Anmeldung: 04.09.1996
(73) Patentinhaber: Continental Aktiengesellschaft, 30165 Hannover (DE)
(72) Erfinder: Sergel, Horst, D-30657 Hannover (DE); Hausmann, Bernadette, Dr., D-30175 Hannover (DE); Rae, Tom, 30826 Garbsen (DE); Hanreich, Werner, A-1040 Wien (AT)

(56) Entgegenhaltungen:
- FR-A- 2 192 907
- GB-A- 1 202 702
- GB-A- 2 073 109
- US-A- 4 221 253
- US-A- 4 269 646

## Beschreibung

Die Erfindung betrifft ein Verfahren zur Herstellung eines Reifens, insbesondere zur Herstellung eines Luftreifens für Kraftfahrzeuge gemäß dem Oberbegriff des Anspruches 1. Die Erfindung betrifft ferner einen nach dem Verfahren hergestellten Reifen.

Ein derartiges Verfahren ist aus der US-A-4,269,646 bekannt. Hier wird der Reifen in zwei voneinander getrennten Verfahrensteilen hergestellt, wobei im ersten Verfahrensteil ein gürtelloser Teilreifen, welcher im Wesentlichen eine Innenplatte, eine Karkasse und einen Wulstbereich umfasst, aufgebaut und anschließend in einer Vulkanisationsform vulkanisiert wird, welche einen ersten vorbestimmten Durchmesser in der Zentralebene und einen zweiten vorbestimmten Durchmesser in den Schultern des Reifens einstellt. Dieser Teilreifen wird nach der Vulkanisation auf einer Vorrichtung montiert, die ein Ändern des gegenseitigen Abstandes der beiden Wülste gestattet. Der Teilreifen wird nun unter Innendruck gesetzt und durch ein axiales Bewegen der beiden Wülste so lange verformt, bis sich der erste vorbestimmte Durchmesser in der Zentralebene einstellt. Anschließend wird ein undehnbares, schmales Band um den Äquator des Teilreifens gewickelt. Durch nochmaliges axiales Bewegen der Wülste des Reifens wird dieser wieder geformt, nun solange, bis in den Schulterbereichen die zweiten vorbestimmten Durchmesser eingestellt sind. Dann werden die unvulkanisierten Gürtellagen und anschließend ein Laufstreifen aufgebracht. Der derartig aufgebaute Reifen wird wieder vulkanisiert.

Aus der GB-A-1 202 702 ist ein Herstellverfahren für Reifen für schwere Lastkraftwagen, Traktoren oder Erdbewegungsmaschinen bekannt. Derartige Reifen besitzen einen sehr voluminösen und daher viel Material beanspruchenden Laufstreifen. Um zu verhindern, daß Laufstreifenmaterial beim Einformen derart fließt, daß sich während der Vulkanisation die Festigkeitsträger in unerwünschter Weise verschieben, wird vorerst ein Teilreifen erstellt, welcher zumindest die Karkasslagen, die Gürtellage, die Seitenwände und die kompletten Wulstbereiche aufweist. Auf den vulkanisierten Teilreifen wird anschließend der Laufstreifen, in ähnlicher Weise wie beim Runderneuerungsprozeß, aufgebracht.

Ein Verfahren zur Herstellung eines Neureifens, wie es beispielsweise derzeit üblich ist, wird im folgenden für einen Luftreifen für einen Personenkraftwagen zusammenfassend erläutert. Die Zeichnungsfiguren 1a bis 1f zeigen schematisch die einzelnen Verfahrensschritte.

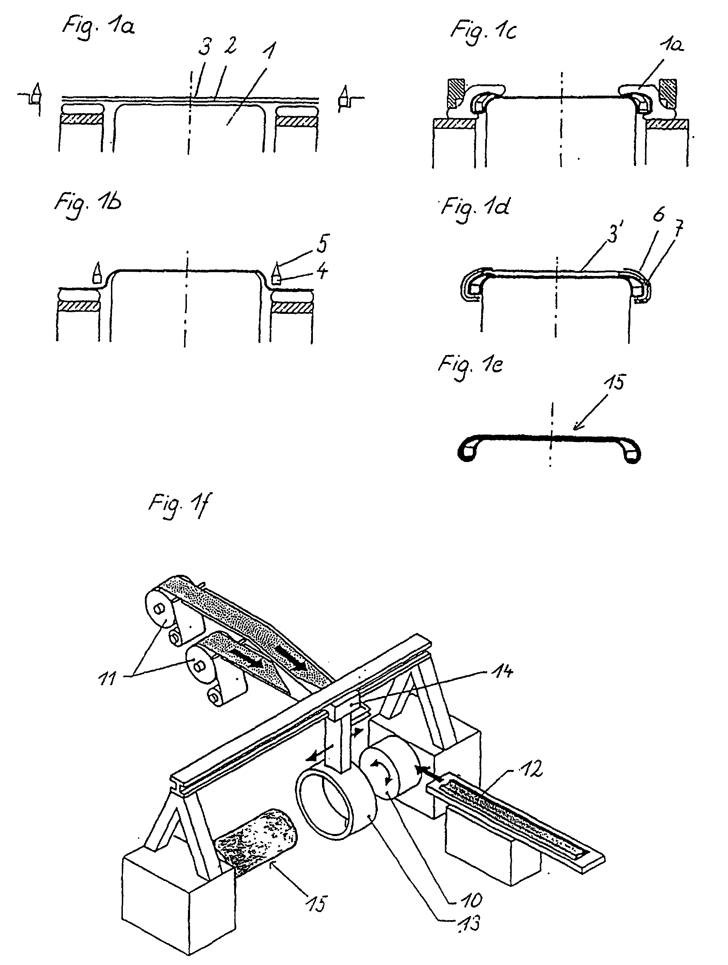

Wie in Fig. 1a gezeigt ist, wird auf eine Aufbautrommel 1 zuerst die Innenplatte 2 eines Reifens und anschließend eine Karkassenlage 3 aufgebracht Bei expandierter Trommel 1 werden die Wulstkerne 4 mitsamt Apex 5 gesetzt (Fig. 1 b). Es folgt der Hochschlagvorgang, indem die Karkassenlagenenden 3 um die Wulstkerne 4 gefaltet werden. Dieser Vorgang wird mit Hilfe von Bälgen 1a durchgeführt (Fig. 1c). Anschließend werden eine weitere Karkassenlage 3' (falls eine zweite Lage vorgesehen ist), die Seitenstreifen 6 (Seitenwandteile) und die Hornprofile 7 angebracht (Fig. 1d). Die Reifenkarkasse 15 ist nun fertiggestellt und kann von der Aufbautrommel 1, die wieder in ihre ursprüngliche Lage gebracht wird, entfernt werden (Fig. 1e).

Fig. 1f zeigt den weiteren Aufbau zum fertigen Rohreifen. Die Reifenkarkasse 15 wird zu einer zweiten Aufbautrommel transferiert, die einen Bombierteil umfaßt. Auf einer gesonderten Gürteltrommel 10 werden die Gürtellagen 11, im allgemeinen sind dies zwei oder drei gummierte Stahlkordlagen, aufgebracht und ggf. mit einer oder zwei Lagen einer Nylonbandage versehen. Zwischen einzelnen Gürtellagen können Gürtelpufferstreifen (hier nicht dargestellt) angeordnet werden. Auf diesen Gürtelverband wird schließlich noch der ggf. mit einer Unterplatte versehene Laufstreifen 12 aufgebracht. Eine einen Tragering 13 für den Gürtellaufstreifenverband umfassende Transfereinrichtung 14 transportiert den Gürtellaufstreifenverband zur Reifenkarkasse 15 und positioniert diesen über der Reifenkarkasse 15. Diese ist bereits zentriert und vorbombiert und wird nun vollends bombiert, mit dem Gürtellaufflächenpaket zusammengefügt, wobei nach dem Entfernen der Transfereinrichtung 14 der Laufstreifen mitsamt dem Gürtelpaket angerollt wird.

Bei dem beschriebenen Verfahren handelt es sich um den sogenannten Zweistufenaufbau. Es ist auch üblich, ein Einstufenverfahren einzusetzen, bei dem die Karkassenherstellung und die Fertigstellung des Rohreifens auf einer einzigen Trommel erfolgen.

Der fertiggestellte Rohreifen wird in einer entsprechenden Vulkanisationsform ausvulkanisiert und erhält somit seine endgültige Gestalt mit eingeformtem Laufstreifenprofil und beschrifteten bzw. auch dekorativ gestalteten Seitenwänden.

Dieses bekannte Herstellverfahren setzt sich aus in ihren einzelnen Schritten exakt festgelegten Produktionsabläufen zusammen, die in ihrer Gesamtheit die Qualität und die Eigenschaften des fertigen Produktes mitbestimmen.

Die Erfindung hat sich nun die Aufgabe gestellt, ein neues, flexibles Herstellverfahren für Reifen zu entwickeln, welches in einem wesentlich größeren Ausmaß als die bekannten Verfahren eine Einflußnahme auf bestimmte Reifeneigenschaften zur Erzielung und Sicherstellung einer hohen Produktqualität gestattet.

Gelöst wird die gestellte Aufgabe erfindungsgemäß dadurch, daß der im Verfahrensteil A erstellte Teilreifen als radial äußerste Lage alternativ
- zumindest eine der inneren Gürtellagen des Gürtelverbandes,
- den Gürtelverband, der im Verfahrensteil B ggf. durch eine zumindest einlagige Bandagenlage abgedeckt wird,
- eine Laufstreifenbasislage bzw. eine Laufstreifenunterplatte
aufweist, wobei der im Verfahrensteil A erstellte Teilreifen in einer Vulkanisationsform vulkanisiert wird, die sowohl seiner Oberfläche als auch seinen Festigkeitsträgern eine vorbestimmte Kontur vermittelt, die bis zur Fertigstellung des Reifens beibehalten wird und die der erwünschten Kontur des im Verfahrensteil B fertig gestellten Reifens entspricht.

Nach dem erfindungsgemäßen Verfahren erfolgt ein Unterbrechen bzw. Teilen des Herstellprozesses, welches es gestattet, verschiedene Reifeneigenschaften während des Herstellprozesses zu optimieren. Welche Reifeneigenschaften und in welchem Ausmaß sie beeinflußbar sind ist davon abhängig, wie weit der Teilreifen aus Verfahrensschritt A komplettiert wird. Wesentlich ist hier, daß der im Verfahrensschritt A erstellte Teilreifen ausvulkanisiert wird. Das läßt zudem noch eine Einflußnahme auf die erzielbare Uniformity zu. Darüber hinaus bietet das erfindungsgemäße Verfahren den Vorteil einer weitgehenden Flexibilisierung der Produkt- und Produktionsplanung. Der fertig vulkanisierte Reifen ist über einen längeren Zeitraum lagerbar, so daß die Entscheidung, in welcher Weise der Reifen komplettiert werden soll, z.B. bezüglich der Laufstreifenmischung oder des Laufstreifenprofiles, auf einen späteren Zeitpunkt verschoben werden kann. Der Reifenhersteller wird somit in die Lage versetzt, den Marktanforderungen entsprechend und prompt zu reagieren.

Besonders vorteilhafte Varianten und Weiterentwicklungen des Verfahrens sind in den Unteransprüchen enthalten.

Bei einer Ausführungsform, bei der als radial äußerste Lage eine Laufstreifenbasislage bzw. eine Laufstreifenunterplatte aufgebracht wird, besteht vorteilhafterweise eine Anzahl von Möglichkeiten, den im Verfahrensteil A hergestellten Teilreifen zu komplettieren.

Bei einer Alternative wird im Verfahrensteil A als radial äußerste Lage eine Laufstreifenbasislage und im Verfahrensteil B zumindest der Laufstreifen-Cap-Teil, gegebenenfalls gemeinsam mit einer zweiten Laufstreifenbasislage, aufgebracht. Diese erfindungsgemäße Variante eröffnet somit die Möglichkeit, den Teilreifen bereits mit einer vulkanisierten Laufstreifenbasis zu versehen.

Dabei kann vorteilhafterweise der im Verfahrensteil B aufgebrachte Laufstreifen oder Laufstreifenteil roh oder vorvulkanisiert oder ausvulkanisiert sein.

Besonders vorteilhaft ist es dabei weiters, wenn der vorvulkanisierte oder ausvulkanisierte Laufstreifen oder Laufstreifenteil als Ring gefertigt wird, welcher eine Innen- und eine Außenkontur besitzt, wobei die Innenkontur im wesentlichen konkav gestaltet ist und der zugehörigen Außenkontur des im Verfahrensteil A erstellten Teilreifens angepaßt ist und die Außenkontur zumindest im wesentlichen der festgelegten Kontur des Komplettreifens in diesem Bereich entspricht. Auf diese Weise läßt sich ein Reifen fertigen, der hinsichtlich der geforderten und erwünschten Reifeneigenschaften optimal ausgelegt sein kann.

Ein solcher Laufstreifenring läßt sich auf einfache Weise durch Dehnung auf den im Verfahrensteil A erstellten Teilreifen aufbringen.

Die im Verfahrensteil B aufgebrachte Bandage kann wärmeschrumpffähige Festigkeitsträger, beispielsweise Nylonfäden, enthalten, alternativ dazu jedoch auch Festigkeitsträger aus wenig oder nicht wärmeschrumpffähigem Material, beispielsweise aus Polyester. Auch hier ergibt sich somit wieder die Möglichkeit, durch die Auswahl des Material bestimmte Reifeneigenschaften zu beeinflussen.

Um einen guten Verbund des zuerst im Verfahrensteil B auf den Teilreifen aufzubringenden Reifenbauteiles zu unterstützen, ist es günstig, wenn die Außenfläche des im Verfahrensteil A erstellten Teilreifens aufgerauht wird. Dieser Aufrauhvorgang kann in besonders einfacher Weise auf mechanischem Weg, beispielsweise durch Bürsten oder auch auf chemischem Weg durch Aufbringen entsprechender Lösungen erfolgen.

Wird im Verfahrensteil A als radial äußerste Lage eine gummierte Festigkeitsträger aufweisende Lage aufgebracht wird der Anrauhvorgang dadurch erleichtert, wenn diese äußerste Lage bezüglich der in ihr verlaufenden Festikgeitsträger asymmetrisch gummiert ist und derart aufgebracht ist, daß die Seite mit der dickeren Gummierung an der Oberfläche des Teilreifens zum Liegen kommt.

Die Festigkeitsträger in der im Verfahrensteil A als radial äußerste Lage aufgebrachte Lage können auch beidseitig mit unterschiedlichen Gummimischungen versehen sein um etwa die Haftung zu dem im Verfahrensteil B zuerst aufzubringenden weiteren Reifenbauteil zu verbessern.

Der im Verfahrensteil A gefertigte Teilreifen kann ohne jede Seitenwandbeschriftung oder ohne jedes Seitenwanddesign erstellt werden. Diesbezüglich kann nun der Reifen im Verfahrensteil B beispielsweise derart komplettiert werden, daß auf jede Seitenwand ein roher Seitenwandabdeckstreifen aufgebracht wird. Die Seitenwände können dann ihre Beschriftung, ihr Design und dergleichen über die Vulkanisationsform erhalten oder aber auch nachträglich, indem der nach Verfahrensteil B fertiggestellte Reifen die Seitenwandbeschriftung bzw. das Seitenwanddesign und dergleichen durch ein Gravurverfahren, beispielsweise mittels Laser, erhält. Das letztgenannte Verfahren ist auch auf solche Fälle anwendbar, wo im Verfahrensteil B keine Seitenwandabdeckstreifen mehr verwendet werden.

Die Zeichnungsfiguren 1a bis 1f dienen zur Veranschaulichung des zum Stand der Technik gehörenden Zweistufenaufbaus und zeigen schematisch die einzelnen Verfahrensschritte, die weiter oben bereits beschrieben sind.

Fig. 2 bis Fig. 4 zeigen schematisch verschiedene Möglichkeiten des Aufbaues von Teilreifen und deren Komplettierung nach der vorliegenden Erfindung.

Dabei zeigt Fig. 2 eine Schrägansicht auf einen Abschnitt einer Hälfte eines fertig vulkanisierten Teilreifens, teilweise aufgeschnitten, Fig. 3 und Fig. 4 Querschnitte durch Teilreifen gemäß weiteren Ausführungsformen.

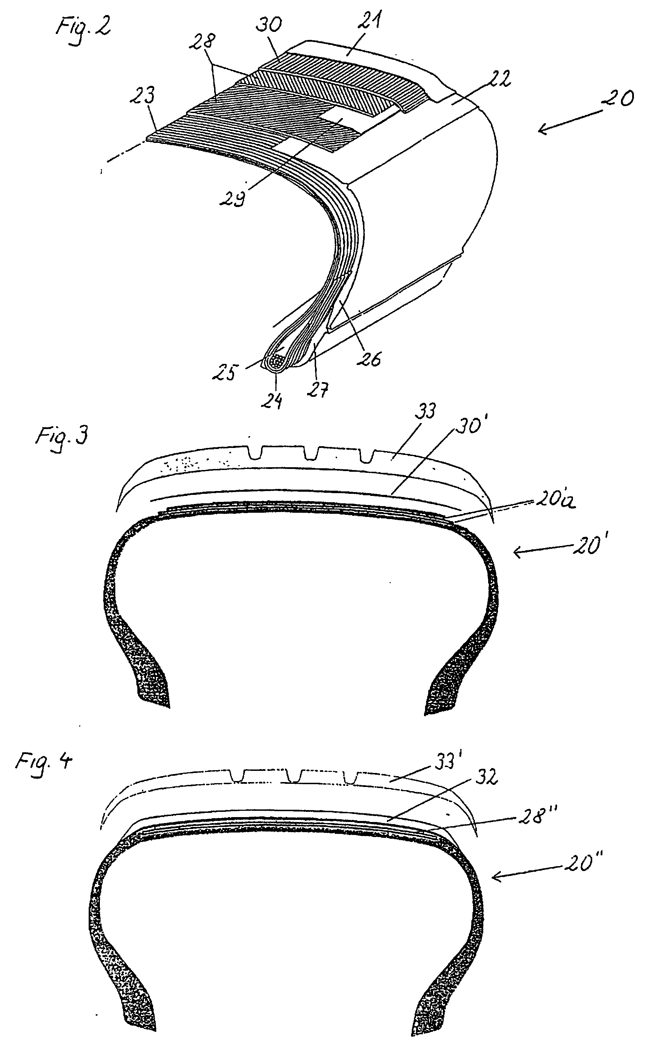

Der in Fig. 2 dargestellte Teilreifen 20 umfaßt als Bauteile eine Unterplatte 21, Schulterstreifen 22, eine Karkassenlage 23, Wulstkerne 24, Apexteile 25, Seitenwände 26, Hornprofile 27, einen zweilagigen Gürtel 28, wobei zwischen den Gürtellagen ein weiterer Gummistreifen 29 (Gürtelpuffer) angeordnet ist und eine Abdecklage 30 (Nylonbandage) sowie eine Innenplatte 31. Der Teilreifen 20 wird insbesondere nach dem eingangs beschriebenen, bekannten Verfahren hergestellt, mit dem Unterschied, daß kein Laufstreifen und zusätzlich die Unterplatte 21 aufgebracht wird.

Der Teilreifen 20 wird anschließend in einer die erwünschte Querschnittskontur vermittelnden Vulkanisationsform, die jedoch innen zumindest weitgehend glatt ausgeführt ist, vulkanisiert. An einer der Seitenwände oder auf der Unterplatte kann eine Kennzeichnung zur Festhaltung der Dimension und dergleichen entweder über die Heizform oder den Heizbalg bzw. nachträglich als gesondert aufzubringender Code angebracht werden.

Es gibt eine Anzahl von Möglichkeiten, den in Fig. 2 dargestellten Teilreifen 20 zu komplettieren.

Bei jeder dieser Möglichkeiten ist es günstig, vorerst die Außenfläche des fertig vulkanisierten, rotierbar montierten Teilreifens 20 anzurauhen. Dieser Vorgang kann auf mechanische Art und Weise durchgeführt werden, beispielsweise durch ein Anbürsten der Oberfläche. Ein Anrauhen auf chemischem Weg mit entsprechenden Lösungen, beispielsweise Dipenten, ist ebenfalls möglich. Alternativ dazu kann im Verfahrensteil A eine weitere dünne Gummilage, die insbesondere Butylkautschuk enthält als äußerste Lage aufgebracht werden, die vor dem Komplettieren des Reifens im Verfahrensteil B abgezogen wird. Auf den weiterhin rotierbar montierten Teilreifen 20 wird schließlich ein roher Laufstreifen aufgebracht, auf die Seitenwände werden dünne, ca. 1 mm dicke Seitenwandabdeckstreifen, deren Mischungszusammensetzung bevorzugt jener der Seitenwände entspricht, aufgelegt und angedrückt. Dabei ist es günstig, wenn sowohl der Teilreifen 20 als auch der Laufstreifen mit einer die Haftung begünstigenden Lösung vorbehandelt sind. Der derart komplettierte Reifen wird in eine Vulkanisationsform, die in bekannter Weise in einzelne Segmente geteilt sein kann, gelegt, um das Ausvulkanisieren des Laufstreifens und der Seitenwandabdeckstreifen zu bewirken. Die Vulkanisationsformteile, die das Laufstreifenprofil und die Seitenwandbeschriftung und dgl. ausformen, sind, wie es bei herkömmlichen Vulkanisationsformen üblich ist, mit den das Profil bildenden Stegen, Lamellenblechen usw. sowie mit entsprechenden Gravuren für die Seitenwandbeschriftung, das Seitenwanddesign und dergleichen versehen.

Anstelle eines rohen Laufstreifens kann ein vorvulkanisierter oder auch ein fertig vulkanisierter Laufstreifen bzw. Laufstreifenring eingesetzt werden. In beiden Fällen sind die Laufstreifen schon mit ihrem Profil versehen. Die Herstellung des vorvulkanisierten oder fertig vulkanisierten Laufstreifens kann nach einer der bekannten Methoden, beispielsweise durch Injection Molding, erfolgen. Der vorvulkanisierte oder ausvulkanisierte Laufstreifenring wird insbesondere konturiert gefertigt, das heißt er wird mit einer bestimmten Innenkontur und einer bestimmten Außenkontur versehen, wobei die Innenkontur im wesentlichen konkav gestaltet ist und der zugehörigen Außenkontur des im Verfahrensteil A erstellte Teilreifens angepaßt ist und die Außenkontur zumindest im wesentlichen der festgelegten Kontur des Komplettreifens in diesem Bereich entspricht. Der vorvulkanisierte oder fertige Laufstreifen bzw. Laufstreifenring kann nach einem der bekannten Verfahren, beispielsweise durch Dehnung, auf dem Teilreifen angebracht werden.. Im Anschluß daran wird der komplette Reifen einem Vulkanisationsvorgang unterzogen. Dieser Vorgang kann in einem Autoklaven in an sich bekannter Weise durchgeführt werden.

Anstelle eines rohen Laufstreifens kann der Teilreifen auch mittels Injection Moldings mit einem Laufstreifen versehen und so in einer das Profil vermittelnden Form ausvulkanisiert werden.

Es ist ferner möglich, bei der Fertigstellung des Reifens auf die Seitenwandabdeckstreifen zu verzichten. Das vereinfacht in diesem Verfahrensschritt die Herstellung, wobei der fertiggestellte Reifen die erforderliche Seitenwandbeschriftung, das Seitenwanddesign und dergleichen beispielsweise mittels eines Gravurverfahrens, etwa auf pyrotechnischem Weg mit Hilfe eines Lasers, erhalten kann. Solche Gravurverfahren sind Gegenstand der deutschen Patentanmeldung P 4422548.2 der Uniroyal Englebert Reifen GmbH. Eine Gravur mit Laser bietet zudem den Vorteil, daß eine in den Seitenwandteilen, die im Verfahrensschritt A aufgebracht werden, eingebettete farbige Mischung auf besonders einfache Weise zum Vorschein gebracht werden kann, so daß sich die Seitenwandbeschriftung bzw. ein etwaiges Design, von der ansonsten schwarzen Seitenwandmischung abhebt.

Der in Fig. 2 dargestellte Teilreifen 20 enthält eine einzige Bandagenlage 30, die, wie bekannt, aus in Gummi eingebetteten parallel zueinander verlaufenden wärmeschrumpffähigen Fäden, beispielsweise Nylon, bestehen kann. Die Nylonfäden innerhalb dieser Bandagenlage verlaufen zumindest im wesentlich in Reifenumfangsrichtung. Diese Bandage kann auch zweilagig ausgeführt werden oder in zwei Teilstreifen, die jeweils die Gürtelkanten abdecken. Anstelle dieser Art einer Bandage kann auch eine sogenannte Spulbandage aufgebracht werden, bei der ein Streifen, der ebenfalls aus in Gummi eingebetteten parallel zueinander verlaufenden wärmeschrumpffähigen Fäden besteht, um die Gürtellagen gewickelt bzw. gespult wird. Solche Spulbandagen gehören zum Stand der Technik und können in unterschiedlicher Art und Weise aufgebracht sein.

Fig. 3 zeigt eine Ausführungsvariante, wo der gemäß Verfahrensteil A gefertigte Teilreifen 20' als radial äußerste Lage mit dem Gürtelverband versehen ist, welcher in diesem Ausführungsbeispiel zwei Gürtellagen 20'a, die herkömmliche Stahlcordlagen sein können, aufweist. Insbesondere diese Ausführungsform ermöglicht eine gezielte Konturbeeinflussung, die besondere Vorteile mit sich bringt. So ist es erstmalig möglich, während des Herstellverfahrens über zwei Vulkanisationsvorgänge die Reifenkontur zu optimieren. So kann der nach Verfahrensteil A fertiggestellte Teilreifen 20' in einer Vulkanisationsform ausvulkanisiert werden, die dem Teilreifen 20' eine Querschnittsgestalt bzw. Querschnittskontur vermittelt, die der gewünschten Kontur im Fertigreifen bereits entspricht. Im Verfahrensteil B wird die Bandage 30' aufgebracht, sowie anschließend ein Laufstreifen 33, ggf. unter Zwischenschaltung einer gesonderten Unterplatte. Diese Art der Trennung zwischen Verfahrensteil A und Verfahrensteil B bietet den Vorteil, daß beim fertigen Reifen in der Bandage 30' eine gleichmäßige Längsspannungsverteilung über die Reifenbreite erzielbar ist, da die Bandage auf einen bereits mit entsprechender Kontur versehenen Reifen aufgebracht wird, was bei dem bekannten Verfahren nach dem Stand der Technik nicht möglich ist, da die Bandage auf einer zylindrischen Trommel aufgebracht wird, wobei dann im fertigen Reifen vielfach Probleme mit einer ungleichmäßigen Spannungsverteilung auftreten.

Zudem ermöglicht diese Ausführungsform der Erfindung, in der Bandagenlage anstelle des üblicherweise eingesetzten Nylons auch andere textile Festigkeitsträger, die weniger oder nicht wärmeschrumpffähig sind, beispielsweise Polyester, einzusetzen, ohne Nachteile in Kauf nehmen zu müssen.

Der gemäß Verfahrensteil A gefertigte Teilreifen kann in unterschiedlichen Verfahrensschritten komplettiert sein. Der Minimalaufbau umfaßt als radial äußerste Lage eine Gürtellage und als sonstige Bauteile zumindest die Innenplatte, die Wulstverstärkungen, die Hornprofile und die Seitenwandteile. Unter radial äußerster Lage ist jene zu verstehen, die dem Gürtelverband- bzw. Laufstreifenbereich zuzuordnen ist. Diese radial äußerste Lage wird dann von einem gummierten Festigkeitsträger gebildet, wenn sie eine Gürtellage oder die Bandage bzw. Spulbandage ist. Diese kann, muß jedoch nicht, im Verfahrensteil A mit einer gesonderten dünnen Gummilage abgedeckt werden. Wird nun der Teilreifen, aus Verfahrensteil A im Verfahrensteil B weiter aufgebaut bzw. komplettiert so ist eine Vorbehandlung der letzten Lage aus Verfahrensteil A vor dem Aufbringen des nächsten Reifenbauteiles im Verfahrensteil B von Vorteil, um einen guten Verbund der Materialien bzw. Bauteile sicherzustellen. Wie schon oben erwähnt bietet sich hier Anrauhen an, und zwar sowohl auf mechanische Weise, beispielsweise durch Bürsten, als auch auf chemischem Weg mit entsprechenden Lösungen. Der Anrauhvorgang kann bei Lagen mit gummierten Festigkeitsträgern leicht zu Verletzungen der Festigkeitsträger führen. Es ist daher von Vorteil, wenn diese radial äußerste Lage, sei es nun eine Gürtellage oder eine Bandagenlage mit einer bezüglich der in ihr verlaufenden Festigkeitsträger asymmetrischen, einseitig dickeren Gummierung versehen ist und derart angeordnet wird, daß die Seite mit der dickeren Gummierung radial nach außen gekehrt zum Liegen kommt. Zusätzlich kann dabei die Gummierung beidseitig der Festigkeitsträger nicht nur in unterschiedlicher Dicke sondern auch mit unterschiedlichen Gummimischungen erfolgen. Es bietet sich hier beispielsweise an, Mischungszusammensetzungen zu verwenden, die die Haftung zu dem in Verfahrensteil B zuerst aufzubringenden weiteren Reifenbauteil verbessern.

Wie schon erwähnt, kann alternativ dazu im Verfahrensteil A eine dünne Gummilage aufgebracht werden, die vor dem Aufbringen des ersten Bauteiles im Verfahrensteil B abgezogen wird.

Bei dem in Fig. 4 dargestellten Ausführungsbeispiel ist der gemäß dem Verfahrensteil A gefertigte Teilreifen 20" soweit komplettiert, daß er mit dem Gürtelverband 28", ggf. einer Bandagenlage und zusätzlich bereits mit einer Laufstreifenbasislage 32 versehen ist. Die Laufstreifenbasislage 32 wird bevorzugt in einer Kautschukmischung erstellt, wie sie für sogenannte Base-Mischungen im Laufstreifen üblich ist und sich somit auf bestimmte Reifeneigenschaften, beispielsweise einen geringen Rollwiderstand und das Handlingsverhalten, günstig auswirkt. Der Teilreifen 20" besitzt daher vorteilhafterweise schon vor dem Aufbringen der Cap- Laufstreifenmischung eine ausvulkanisierte Basis, die in gleichmäßiger Dicke über den gesamten Reifenumfang verläuft. Das ist bei der herkömmlichen Reifenherstellung nicht der Fall, da während der Vulkanisation durch das Einformen des Profiles in die Cap-Mischung auch Deformationen in der Laufstreifenbasis auftreten.

Auf den Laufstreifenbasisteil 32 wird im Verfahrensteil B der Cap-Teil 33' aufgebracht. Dabei kann es von Vorteil sein, zwischen der Basis und der Cap eine gesonderte Gummischicht, die den Verbund Basisteil 32 zu Cap unterstützt, vorgesehen wird. Das kann in Form einer Unterplatte aus einer entsprechenden Gummimischung oder in Form eines zweiten Basisteiles aus einer entsprechenden Mischung durchgeführt werden. Wie bekannt kann femer der Cap-Teil mit Laufstreifenseitenprofilen versehen sein.

Alternativ dazu kann auch bei dieser Ausführungsform der Laufstreifen-Cap-Teil vor dem Aufbringen auf dem Teilreifen vorvulkanisiert oder ausvulkanisiert werden und, wie beim Ausführungsbeispiel gemäß Fig. 2 beschrieben, mit einer Innen- und Außenkontur versehen, gleichermaßen gefertigt und aufgebracht werden.

Das Aufbringen eines Laufstreifenbasisteiles im Verfahrensteil A ist femer noch mit dem Vorteil verbunden, daß vor dem Durchführen des Verfahrensteiles B etwaige Reifenungleichförmigkeiten korrigiert werden können, indem der Basisteil entsprechend abgeschliffen wird.

Die Erfindung ist auf die dargestellten Ausführungsvarianten nicht eingeschränkt. So ist es insbesondere möglich, die bei den einzelnen Ausführungsvarianten beschriebenen Maßnahmen und Verfahrensschritte miteinander in unterschiedlicher Art und Weise zu kombinieren.

Erwähnt sei femer, daß die Heiz- bzw. Vulkanisationszeit für den in Verfahrensteil B komplettierten Reifen wesentlich geringer ist als für einen herkömmlichen Rohreifen.

Einzelne weitere übliche Reifenbauteile, wie beispielsweise Gürtelpufferstreifen, sind bei der Beschreibung der Ausführungsvarianten nicht gesondert erwähnt, können jedoch sowohl im Verfahrensteil A als auch im Verfahrensteil B, je nach Trennung der beiden Verfahrensteile A und B, in den Reifen eingebaut werden. Die diesbezüglich zu treffenden Maßnahmen entsprechen dem Stand der Technik und sind daher dem Fachmann geläufig. Selbstverständlich können nach dem erfindungsgemäßen Verfahren auch Reifen ohne Bandagenlage(n) radial außerhalb des Gürtelverbandes gefertigt werden.

## Patentansprüche

1. Verfahren zur Herstellung eines Reifens, insbesondere zur Herstellung eines Luftreifens für Kraftfahrzeuge, wobei das Verfahren einen schrittweisen Aufbau des Reifens mit einer möglichst weitgehend luftundurchlässigen Schicht, zumindest einer Karkasslage, Hornprofilen, Wulstkernen, Seitenwänden, einem Gürtelverband, gegebenenfalls einer ein- oder mehrteiligen Gürtelbandage und einem Laufstreifen umfaßt, wobei das Herstellverfahren in zwei voneinander getrennte Verfahrensteile A und B geteilt ist, wobei im Verfahrensteil A ein Teilreifen, welcher in einer Vulkanisationsform vulkanisiert wird, schrittweise aufgebaut wird, und wobei im Verfahrensteil B der bzw. die den Reifen komplettierende(n) Bauteil(e) aufgebracht wird bzw. werden und der fertig aufgebaute Reifen ebenfalls einem Vulkanisationsvorgang unterzogen wird,
**dadurch gekennzeichnet,**
**daß** der im Verfahrensteil A erstellte Teilreifen als radial äußerste Lage alternativ
• zumindest eine der inneren Gürtellagen des Gürtelverbandes,
• den Gürtelverband, der im Verfahrensteil B ggf. durch eine zumindest einlagige Bandagenlage abgedeckt wird,
• eine Laufstreifenbasislage bzw. eine Laufstreifenunterplatte
aufweist, wobei der im Verfahrensteil A erstellte Teilreifen (20, 20', 20") in einer Vulkanisationsform vulkanisiert wird, die sowohl seiner Oberfläche als auch seinen Festigkeitsträgern eine vorbestimmte Kontur vermittelt, die bis zur Fertigstellung des Reifens beibehalten wird und die der erwünschten Kontur des im Verfahrensteil B fertig gestellten Reifens entspricht.

2. Verfahren nach Anspruch 1, **dadurch gekennzeichnet, dass** im Verfahrensteil A die radial äußerste Lage mit einer dünnen Gummilage abgedeckt wird.

3. Verfahren nach Anspruch 1 oder 2, **dadurch gekennzeichnet, daß** im Verfahrensteil A als radial äußerste Lage eine Laufstreifenbasislage (32) aufgebracht wird und im Verfahrensteil B zumindest der Laufstreifen-Cap-Teil (33'), ggf. gemeinsam mit einer zweiten Laufstreifenbasislage, aufgebracht wird.

4. Verfahren nach einem der Ansprüche 1 bis 3, **dadurch gekennzeichnet, daß** der im Verfahrensteil B aufgebrachte Laufstreifen oder Laufstreifenteil entweder roh oder vorvulkanisiert oder ausvulkanisiert ist.

5. Verfahren nach Anspruch 4, **dadurch gekennzeichnet, daß** der vorvulkanisierte oder ausvulkanisierte Laufstreifen oder Laufstreifenteil als Ring gefertigt wird, welcher eine Innen- und eine Außenkontur besitzt, wobei die Innenkontur im wesentlichen konkav gestaltet ist und der zugehörigen Außenkontur des im Verfahrensteil A erstellten Teilreifens angepaßt ist und die Außenkontur zumindest im wesentlichen der festgelegten Kontur des Komplettreifens in diesem Bereich entspricht.

6. Verfahren nach Anspruch 5, **dadurch gekennzeichnet, daß** der Laufstreifenring durch Dehnung auf den im Verfahrensteil A erstellten Teilreifen aufgebracht wird.

7. Verfahren nach einem der Ansprüche 1 bis 6, **dadurch gekennzeichnet, daß** die im Verfahrensteil B aufgebrachte Bandage wärmeschrumpffähige Festigkeitsträger, insbesondere Nylonfäden, enthält.

8. Verfahren nach einem der Ansprüche 1 bis 7, **dadurch gekennzeichnet, daß** die im Verfahrensteil B aufgebrachte Bandage einen wenig oder nicht wärmeschrumpffähigen Festigkeitsträger, insbesondere Polyesterfäden, enthält.

9. Verfahren nach einem der Ansprüche 1 bis 8, **dadurch gekennzeichnet, daß** vor dem Aufbringen weiterer Reifenbauteile im Verfahrensteil B die Außenfläche des im Verfahrensteil A erstellten Teilreifens (20, 20', 20") in dem entsprechenden Bereich aufgerauht wird.

10. Verfahren nach Anspruch 9, **dadurch gekennzeichnet, daß** der Aufrauhvorgang auf mechanischem Weg, beispielsweise durch Bürsten oder auf chemischem Weg durch Aufbringen entsprechender Lösungen erfolgt.

11. Verfahren nach einem der Ansprüche 1 bis 10, **dadurch gekennzeichnet, daß** im Verfahrensteil A als radial äußerste Lage eine gummierte Festigkeitsträger aufweisende Lage aufgebracht wird, welche bezüglich der in ihr verlaufenden Festigkeitsträger asymmetrisch gummiert ist und derart aufgebracht wird, daß die Seite mit der dickeren Gummierung an der Oberfläche des Teilreifens zum Liegen kommt.

12. Verfahren nach Anspruch 11, **dadurch gekennzeichnet, daß** sich die Gummierung der Festikgeitsträger auf jeder Seite der Lage bezüglich der Mischungs-zusammensetzung unterscheidet.

13. Verfahren nach einem der Ansprüche 1 bis 12, **dadurch gekennzeichnet, daß** im Verfahrensteil B auf jede Seitenwand ein roher Seitenwandabdeckstreifen aufgebracht wird.

14. Verfahren nach einem der Ansprüche 1 bis 13, **dadurch gekennzeichnet, daß** der nach Verfahrensteil B fertiggestellte Reifen die Seitenwandbeschriftung, das Seitenwanddesign und dergleichen durch ein Gravurverfahren, beispielsweise mittels Laser, erhält.

15. Reifen, hergestellt nach dem Verfahren gemäß einem oder mehreren der Ansprüche 1 bis 14.

## Claims

1. Method of producing a tyre, more especially producing a pneumatic tyre for automotive vehicles, the method including a stepwise construction of the tyre with a layer, which is as largely air-impermeable as possible, at least one carcase ply, horn profiles, bead cores, sidewalls, a belt binding, possibly a one-part or multipart belt bandage and a tread strip, the production method being divided into two method parts A and B which are separate from each other, a partial tyre, which is vulcanised in a vulcanising mould, being stepwisely constructed in method part A, and the component part(s) which completes or respectively complete the tyre, being applied in method part B, and the fully constructed tyre also being subjected to a vulcanisation process,
**characterised in that** the partial tyre, produced in method part A, alternatively has, as the radially outermost ply:
• at least one of the internal belt plies of the belt binding,
• the belt binding, which is covered in method part B possibly by an at least one-ply bandage ply, and
• a tread strip base ply or respectively a tread strip substructure,
the partial tyre (20, 20', 20"), produced in method part A, being vulcanised in a vulcanising mould which provides both its surface and its reinforcing members with a predetermined contour which is maintained until the tyre is completed, and which corresponds to the desired contour of the tyre completed in method part B.

2. Method according to claim 1, **characterised in that** the radially outermost ply is covered with a thin rubber ply in method part A.

3. Method according to claim 1 or 2, **characterised in that** a tread strip base ply (32) is applied as the radially outermost ply in method part A, and at least the tread strip cap part (33'), possibly together with a second tread strip base ply, is applied in method part B.

4. Method according to one of claims 1 to 3, **characterised in that** the tread strip or tread strip portion, applied in method part B, is either rough or prevulcanised or fully vulcanised.

5. Method according to claim 4, **characterised in that** the prevulcanised or fully vulcanised tread strip or tread strip portion is produced as a ring which has an internal and an external contour, the inside contour having a substantially concave configuration and being adapted to the associated external contour of the partial tyre, produced in the method part A, and the external contour corresponding at least substantially to the fixed contour of the complete tyre in this region.

6. Method according to claim 5, **characterised in that** the tread strip ring is applied to the partial tyre, produced in method part A, by expansion.

7. Method according to one of claims 1 to 6, **characterised in that** the bandage, which is applied in method part B, includes heat-shrinkable reinforcing members, more especially nylon filaments.

8. Method according to one of claims 1 to 7, **characterised in that** the bandage, which is applied in method part B, includes a reinforcing member which is slightly or not heat-shrinkable, more especially polyester filaments.

9. Method according to one of claims 1 to 8, **characterised in that**, prior to additional tyre component parts being applied in method part B, the external face of the partial tyre (20, 20', 20") which has been produced in method part A is roughened-up in the appropriate region.

10. Method according to claim 9, **characterised in that** the roughening-up process is effected in a mechanical manner, for example by means of brushes or in a chemical manner by applying appropriate solutions.

11. Method according to one of claims 1 to 10, **characterised in that** a rubber-coated ply, having reinforcing members, is applied as the radially outermost ply in method part A, which ply is rubber-coated asymmetrically relative to the reinforcing members which extend therein and is applied in such a manner that the side with the thicker rubber coating abuts against the surface of the partial tyre.

12. Method according to claim 11, **characterised in that** the rubber-coating of the reinforcing members on each side of the ply differs in respect of the mixture composition.

13. Method according to one of claims 1 to 12, **characterised in that** a crude sidewall cover strip is applied to each sidewall in method part B.

14. Method according to one of claims 1 to 13, **characterised in that** the tyre, finished according to method part B, is given the sidewall lettering, the sidewall design and the like by means of an engraving process, for example by means of lasers.

15. Tyre, produced by the method according to one or more of claims 1 to 14.

## Revendications

1. Procédé de fabrication d'un pneumatique, en particulier pour la fabrication d'un pneumatique de véhicules automobiles, le procédé comprenant une constitution par étapes du pneumatique avec une couche la plus imperméable possible à l'air, au moins une couche de carcasse, des profils en corne, des noyaux de talons, des parois latérales, un bandage de ceinture, éventuellement un bandage de ceinture en une ou en plusieurs parties et une bande de roulement, le procédé de fabrication étant divisé en deux parties de procédé A et B séparées entre elles, un pneumatique partiel, qui est vulcanisé dans un moule de vulcanisation, étant constitué par étapes dans la partie de procédé A et le ou les composant(s) complétant le pneumatique étant appliqué(s) et le pneumatique entièrement constitué étant soumis également à une opération de vulcanisation dans la partie de procédé B, **caractérisé en ce que** le pneumatique partiel élaboré dans la partie de procédé A comprend en alternance comme couche radiale située le plus à l'extérieur
au moins une des couches de ceinture intérieures du bandage de ceinture,
le bandage de ceinture, qui, dans la partie de procédé B, est éventuellement recouvert par une couche de bandage ayant au moins une couche,
une couche de base de bande de roulement ou une sous-plaque de bande de roulement,
le pneumatique partiel (20, 20', 20") élaboré dans la partie de procédé A étant vulcanisé dans un moule de vulcanisation, qui confère aussi bien à sa surface qu'à ses supports de résistance un contour prédéterminé, qui est maintenu jusqu'à l'achèvement du pneumatique et qui correspond au contour souhaité du pneumatique achevé dans la partie de procédé B.

2. Procédé selon la revendication 1, **caractérisé en ce que** dans la partie de procédé A, la couche radiale située le plus à l'extérieur est recouverte d'une mince couche de caoutchouc.

3. Procédé selon la revendication 1 ou 2, **caractérisé en ce que**, comme couche radiale située le plus à l'extérieur, une couche de base de bande roulement (32) est appliquée dans la partie de procédé A et au moins la partie de recouvrement de la bande de roulement (33') est appliquée dans la partie de procédé B, éventuellement en même temps qu'une deuxième couche de base de bande de roulement.

4. Procédé selon l'une des revendications 1 à 3, **caractérisé en ce que** la bande de roulement ou la partie de bande de roulement appliquée dans la partie de procédé B est soit brute, soit prévulcanisée, soit entièrement vulcanisée.

5. Procédé selon la revendication 4, **caractérisé en ce que** la bande de roulement ou la partie de bande de roulement prévulcanisée ou entièrement vulcanisée est fabriquée en tant qu'anneau, qui possède un contour intérieur et un contour extérieur, le contour intérieur étant conçu sensiblement de forme concave et étant adapté au contour extérieur correspondant du pneumatique partiel élaboré dans la partie de procédé A et le contour extérieur correspondant dans cette zone au moins sensiblement au contour défini du pneumatique complet.

6. Procédé selon la revendication 5, **caractérisé en ce que** l'anneau de bande de roulement est mis en place par dilatation sur le pneumatique partiel élaboré dans la partie de procédé A.

7. Procédé selon l'une des revendications 1 à 6, **caractérisé en ce que** le bandage appliqué dans la partie de procédé B comprend des supports de résistance thermorétractables, en particulier des fils en nylon.

8. Procédé selon l'une des revendications 1 à 7, **caractérisé en ce que** le bandage appliqué dans la partie de procédé B comprend un support de résistance peu ou pas thermorétractable, en particulier des fils en polyester.

9. Procédé selon l'une des revendications 1 à 8, **caractérisé en ce qu'**avant l'application d'autres composants de pneumatiques dans la partie de procédé B, la surface extérieure du pneumatique partiel (20, 20', 20") élaboré dans la partie de procédé A est rendue rugueuse dans la zone appropriées.

10. Procédé selon la revendication 9, **caractérisé en ce que** la procédure pour rendre la surface rugueuse est mécanique, par exemple à l'aide de brosses, ou chimique, par exemple à l'aide d'une application de solutions correspondantes.

11. Procédé selon l'une des revendications 1 à 10, **caractérisé en ce que** dans la partie de procédé A on applique an tant que couche radiale située le plus à l'extérieur une couche comprenant des supports de résistance engommés, qui fait l'objet d'un gommage asymétrique en référence aux supports de résistance qui s'y trouvent et qui est appliquée de telle manière que le côté avec l'engommage le plus épais s'appuie sur la surface du pneumatique partiel.

12. Procédé selon la revendication 11, **caractérisé en ce que** l'engommage des supports de résistance se différentie de chaque côté de la couche en ce qui concerne la composition du mélange.

13. Procédé selon l'une des revendications 1 à 12, **caractérisé en ce que** dans la partie de procédé B un ruban brut de recouvrement des parois latérales est appliqué sur chaque paroi latérale.

14. Procédé selon l'une des revendications 1 à 13, **caractérisé en ce que** l'inscription latérale, le dessin des parois latérales et les éléments similaires sont appliqués au pneumatique réalisé selon la partie de procédé B par un procédé de gravure, par exemple par laser.

15. Pneumatique réalisé avec le procédé selon l'une ou plusieurs des revendications 1 à 14.
